# EUROPEAN PATENT SPECIFICATION

(11) **EP 4 177 124 B1**
(45) Date of publication and mention of the grant of the patent: **09.12.2026**
(21) Application number: 22196698.9
(22) Date of filing: 20.09.2022
(51) Int. Cl.: B60W 30/18, B60W 50/00, B60W 60/00

(54) **LANE CHANGE METHOD AND SYSTEM**
SPURWECHSELVERFAHREN UND SPURWECHSELSYSTEM
PROCÉDÉ ET SYSTÈME DE CHANGEMENT DE VOIE

(30) Priority: 04.11.2021 KR 20210150288; 14.02.2022 KR 20220018946
(43) Date of publication of application: 10.05.2023
(73) Proprietor: Korea Advanced Institute of Science and Technology, Daejeon 34141 (KR)
(72) Inventor: KUM, Dongsuk, Daejeon 34141 (KR); LEE, Kibeom, Daejeon 34141 (KR); HWANG, Seul Bin, Daejeon 34141 (KR)
(74) Representative: V.O.

(56) References cited:
- US-A1- 2020 070 659
- US-A1- 2020 180 636
- KIM HAYOUNG ET AL: "Intention Aware Motion Planning with Model Predictive Control in Highway Merge Scenario", SAE 2010 COMMERCIAL VEHICLE ENGINEERING CONGRESS SAE TECHNICAL PAPERS, vol. 1, 25 March 2019 (2019-03-25), US, pages 1 - 7, XP093022782, ISSN: 0148-7191, DOI: 10.4271/2019-01-1402
- HART PATRICK ET AL: "Lane-Merging Using Policy-based Reinforcement Learning and Post-Optimization", 2019 IEEE INTELLIGENT TRANSPORTATION SYSTEMS CONFERENCE (ITSC), IEEE, 27 October 2019 (2019-10-27), pages 3176 - 3181, XP033668326, DOI: 10.1109/ITSC.2019.8917002
- HWANG SEULBIN ET AL: "Autonomous Vehicle Cut-In Algorithm for Lane-Merging Scenarios via Policy-Based Reinforcement Learning Nested Within Finite-State Machine", IEEE TRANSACTIONS ON INTELLIGENT TRANSPORTATION SYSTEMS, IEEE, PISCATAWAY, NJ, USA, vol. 23, no. 10, 1 October 2022 (2022-10-01), pages 17594 - 17606, XP011922729, ISSN: 1524-9050, [retrieved on 20220308], DOI: 10.1109/TITS.2022.3153848

## Description

### TECHNICAL FIELD

The invention relates to a technology for changing a lane of a vehicle.

### BACKGROUND OF THE DISCLOSURE

US 2020/180 636 A1 discloses a vehicle running control method including determining whether a host vehicle in a traveling lane enters the junction section during autonomous traveling, collecting environment information of at least one vehicle adjacent to the host vehicle upon determining that the host vehicle enters the junction section, determining whether the traveling lane and the target lane are congested using the collected environment information, upon determining that the traveling lane and the target lane are congested, estimating a cut-in point of a preceding vehicle and determining a target point of the target lane from the estimated cut-in point, generating a cut-in path to the determined target point and displaying an intention to change lanes, and determining whether a rear approaching vehicle has the intention to yield and performing the lane change according to the result of the determination.

US 2020/070 659 A1 discloses an automatic driving system that includes: an information acquiring device configured to acquire driving environment information indicating a driving environment of the vehicle; a running control device configured to execute lane change control from a first lane to a second lane during automatic driving of the vehicle based on the driving environment information; and a display device configured to display an upper limit value of a running speed of the vehicle which is set by a driver of the vehicle during automatic driving.

KIM HAYOUNG ET AL, "Intention Aware Motion Planning with Model Predictive Control in Highway Merge Scenario", SAE 2010 COMMERCIAL VEHICLE ENGINEERING CONGRESS SAE TECHNICAL PAPERS, US, (20190325), vol. 1, discloses an intention aware motion planning method using finite state machine and model predictive control without any vehicle-to-vehicle or vehicle-to-infrastructure communications. A behavioral planner contains a "negotiate" state which could inform an intent to other road users and estimate the other user's intention from their reaction.

As the needs of a user for a vehicle are increased, various systems for improving the safety and convenience of a driver are developed. In particular, in the global vehicle industry, an autonomous driving technology is actively developed according to a commercialization plan for autonomous driving. Accordingly, it is expected that the importance of a surrounding vehicle prediction technology corresponding to a core technology of an autonomous vehicle is increased.

However, a case where an autonomous vehicle does not perform a lane change in which the conflicting interests of surrounding vehicles are maximized or an accident occurs when the autonomous vehicle performs the lane change frequently occurs. The existing lane change technologies do not flexibly handle a collision situation and do not consistently avoid an accident. Furthermore, the existing lane change technologies show a sensitive tradeoff relation in which lane change performance is low if the safety of a vehicle is secured or the level of safety is low if a lane change is positively performed.

### SUMMARY

The invention proposes a lane change method with the features of claim 1 and a lane change system according to claim 8. Further advantageous embodiments are disclosed in the dependent claims.

A safe and consistent lane change can be performed because the lane change is performed by dividing the lane change into several stages based on a finite state machine and setting a transition criterion suitable for characteristics for each step.

Furthermore, an optimal lane change strategy suitable for a driver's propensity can be derived by adjusting a transition criterion.

Moreover, a lane change success rate can be maximized without sacrificing the safety of a vehicle because a deep reinforcement learning-based methodology is used when the vehicle performs a lane change. Accordingly, the commercialization of an autonomous vehicle can be advanced by securing lane change performance of the vehicle in an essential lane change section, such as a merge section, in addition to a non-essential lane change case such as passing.

### DESCRIPTION OF THE DRAWINGS

The foregoing aspects and many of the attendant advantages of this disclosure will become more readily appreciated as the same become better understood by reference to the following detailed description, when taken in conjunction with the accompanying drawings, wherein:
FIG. 1 is a diagram illustrating a position and movement of a vehicle in each step when the vehicle performs a lane change.
FIG. 2 is a block diagram for describing a construction of a lane change system in an embodiment.
FIG. 3 is a flowchart for describing a lane change method of the lane change system.
FIG. 4 is a diagram illustrating a finite state machine for a lane change.
FIG. 5 is a diagram for describing a gap search and evaluation algorithm for a lane change.
FIG. 6 is a diagram for describing a deep reinforcement learning algorithm in a lane change stage.
FIG. 7 is a diagram for describing a transition condition between stages, which is set for a lane change.
FIG. 8 is a diagram illustrating a pseudo code of a lane change algorithm including transition conditions set for a lane change.

### DETAILED DESCRIPTION

While illustrative examples are illustrated and described, it will be appreciated that various changes can be made therein without departing from the invention as defined in the appended claims.

Hereinafter, embodiments are described in detail with reference to the accompanying drawings.

An operation for deriving safe and consistent lane change performance of a vehicle by determining a driving step of the vehicle through the evaluation of a degree of gap risk between vehicles in real time based on the finite state machine is described. A lane change propensity can be adjusted by adjusting a transition condition of the finite state machine.

Furthermore, a high lane change success rate can be achieved without sacrificing the safety of a vehicle through sufficient experiences in a complicated situation because an interaction with a surrounding vehicle is maximized by applying a deep reinforcement learning algorithm in a lane change stage.

Furthermore, the present disclosure may be used in various scenarios for a lane change, such as a lane merge section and a modern roundabout, in addition to a lane change for passing. In particular, the present disclosure is effective in an essential lane change situation, such as the lane merge section in which a lane change limitation distance is present, in that a lane change success rate is not sacrificed while guaranteeing the safety of a vehicle.

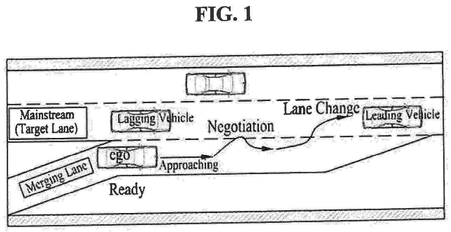

FIG. 1 is a diagram illustrating a position and movement of a vehicle in each step when the vehicle performs a lane change.

A lane change system can guarantee the safety of a vehicle while guaranteeing lane change performance of the vehicle by dividing the state in which the vehicle performs a lane change into several stages. The lane change system may output a path and velocity plan for lane change corresponding to driving state information of the vehicle using a lane change algorithm. In this case, the path and velocity plan may include path information of the vehicle and velocity information of the vehicle for changing a lane. The lane change system may output a path and a velocity of the vehicle for lane change based on the output path and velocity plan. The lane change system may perform a lane change into an optimal gap that is selected by analyzing the easiness of the lane change and calculating a degree of gap risk of each gap by using a gap search and evaluation algorithm for the lane change prior to the lane change. Furthermore, the lane change system can significantly improve the safety and lane change performance of a vehicle when a vehicle performs a lane change, such as that stopping the lane change and setting another gap, when the degree of risk exceeds a criterion by determining the degree of risk for an optimal gap that is selected in real time while the vehicle performs the lane change. Accordingly, the lane change system can reduce an accident that consistently occurs when the existing vehicle (autonomous vehicle) performs a lane change, and can improve lane change performance.

In order to simultaneously guarantee lane change performance and stability of a vehicle, the finite state machine that determines a lane change transition condition that needs to be now selected by the vehicle may be designed. In this case, the lane change transition condition may mean a driving step that needs to be now selected by the vehicle, and includes a ready stage, an approaching stage, a negotiation stage, a lane change stage, and a completion stage.

In this case, the vehicle may correspond to a passenger car (e.g., a sedan or a SUV), a truck, or a bus, and may be driven by a motor or may be driven by electricity or hydrogen not the motor. Furthermore, the vehicle may mean an autonomous vehicle that autonomously drives although a driver does not manipulate the vehicle. As described above, the lane change system may operate in the vehicle. An autonomous vehicle is described as an example in order to describe a lane change operation of the vehicle.

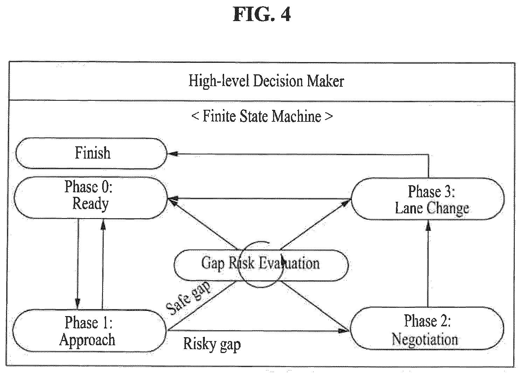

Reference is made to the finite state machine in FIG. 4 for describing the lane change transition condition. Accordingly, the ready stage, the approaching stage, the negotiation stage, the lane change stage, and the completion stage are described.

In the ready stage, a vehicle (an ego vehicle) drives while maintaining a safety distance from a leading vehicle in a lane in which the vehicle is placed, and simultaneously searches for an optimal gap between the vehicle and a surrounding vehicle for a lane change. In order to search for an optimal gap, the easiness of the lane change may be analyzed, and an optimal gap in which a degree of gap risk is secured may be derived by evaluating a level of safety and approach between all vehicles, which may be sensed, as in FIG. 4. In this case, the analysis of the easiness of the lane change and the safety may be derived by the gap search and evaluation algorithm.

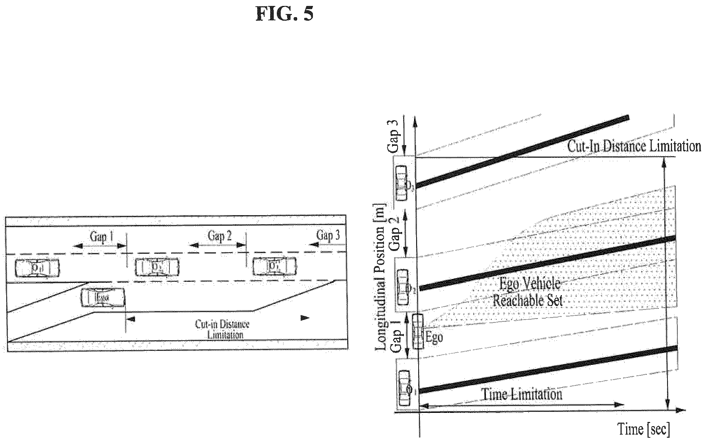

FIG. 5 is a diagram for describing the gap search and evaluation algorithm for a lane change. The gap search and evaluation algorithm analyzes the easiness of a lane change and evaluates a degree of gap risk based on an algorithm for predicting a future movement of a surrounding vehicle. A minimum safety distance between a lagging vehicle and a leading vehicle in each gap may be taken into consideration like a gray area. The minimum safety distance is a minimum distance for avoiding an unexpected accident, and may be calculated as the sum of a free running distance and a stop distance. Furthermore, an area (blue area) that may be physically reached by a vehicle for a predicted time may be calculated.

The analysis of the easiness of a lane change is for determining whether a gap for a lane change is a gap between vehicles, which is reachable by a vehicle for a minimum time or more that is taken to perform the lane change on the basis of a longitudinal position of the vehicle. The degree of gap risk is for determining whether a gap between a vehicle and a surrounding vehicle has a minimum safety distance. The safety of a vehicle may be evaluated based on the determined degree of gap risk. An optimal gap that satisfies both the easiness of a lane change and the safety is set as a target gap.

**In** the approaching stage, the vehicle may approach a retrieved gap in order to adjust the longitudinal position with the gap retrieved in the ready stage. An approach algorithm may derive approaching acceleration based on a relative distance and speed between the leading vehicle and the lagging vehicle in the retrieved gap.

**In** the negotiation stage, the vehicle widens a gap area to be cut in and checks a yield intention of the lagging vehicle by showing an intention of the lane change to the lagging vehicle in the retrieved gap. Whether a lane change is successful and the level of safety are greatly influenced by the yield intention of the lagging vehicle in the target gap. Accordingly, the vehicle can increase the safety of the lane change by driving very close to a next lane and previously checking the yield intention of the lagging vehicle prior to the lane change. Furthermore, an effect in that a lane change target gap can be increased in the state in which the safety of the vehicle has been guaranteed may be expected.

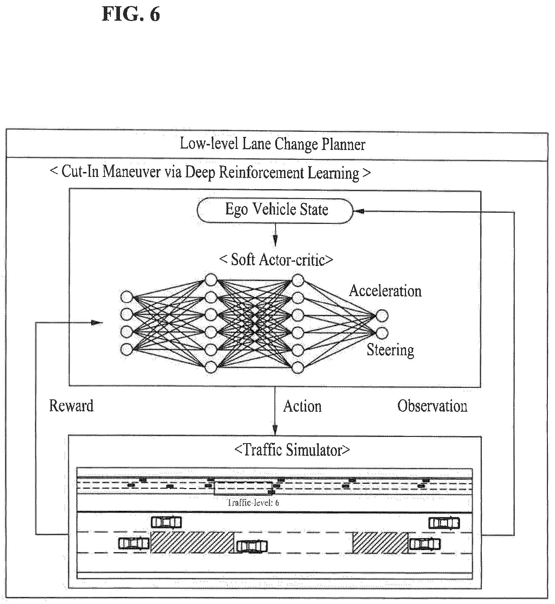

In the lane change stage, the vehicle performs the lane change by using the deep reinforcement learning algorithm not having a model. FIG. 6 is a diagram for describing the deep reinforcement learning algorithm in the lane change stage. The prediction of movements of a vehicle and surrounding vehicles becomes difficult because an interaction between the vehicle and the surrounding vehicles having various driving propensities is maximized when a lane change is performed. The deep reinforcement learning algorithm not having a model may derive an optimal lane change execution ability suitable for each situation through sufficient repetition training in a simulator in which various lane change situations have been implemented.

In the lane change stage using the deep reinforcement learning algorithm, a lane change path for the vehicle may be generated by complexly determining various conditions, such as a form of a road or a limitation condition (e.g., the end of a merge road) in which a lane has to be changed, in addition to an interaction with surrounding vehicles.

In the completion stage, after the vehicle successfully enters a lane into which the lane of the vehicle is to be changed, the vehicle maintains the lane by considering an inter-vehicle distance with the leading vehicle in the entered lane.

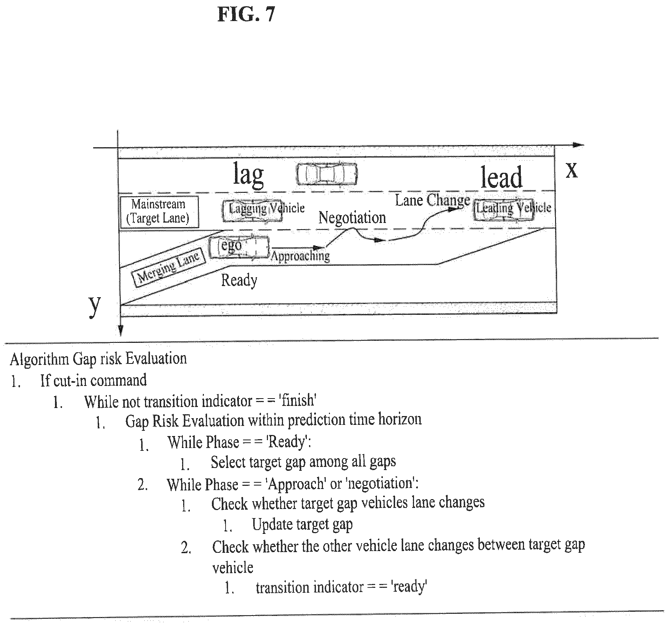

FIG. 7 is a diagram for describing a transition condition between stages, which is set for a lane change.

The lane change system may control a vehicle to change a lane on which the vehicle is driving based on a plurality of lane change transition conditions that are set for a lane change in a retrieved gap. The lane change system may search for a gap between the vehicle and a surrounding vehicle in the ready stage of the vehicle. The lane change system may transition to the approaching stage or the negotiation stage when searching for the gap in the ready stage. The lane change system may identify whether the vehicle has performed the lane change into the retrieved gap (or a target gap). In this case, when the lane change is performed, the lane change system may update the retrieved gap. Furthermore, the lane change system may identify whether another vehicle performs a lane change between the vehicle and the surrounding vehicle in the retrieved gap. In this case, when the another vehicle performs the lane change, the lane change system may transition to the ready stage.

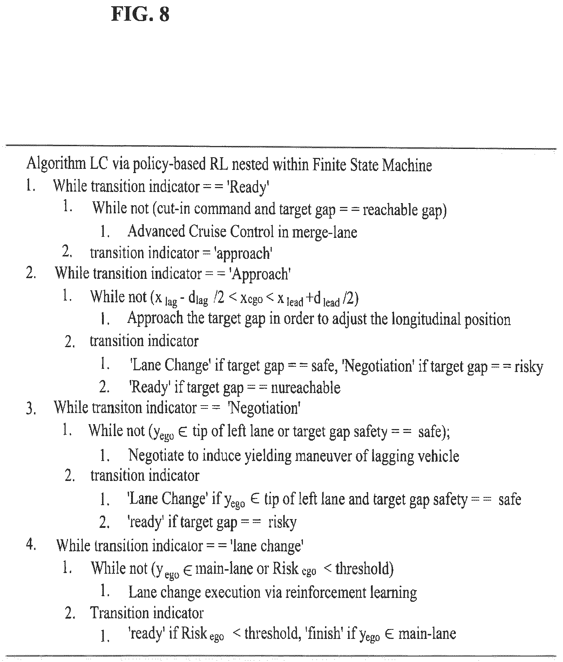

FIG. 8 is a diagram illustrating a pseudo code of a lane change algorithm including transition conditions set for a lane change.

For a transition from the ready stage to the approaching stage, in order to search for a gap for a lane change, the gap reachable by a vehicle for a minimum time or more that is taken to perform the lane change needs to be derived through the gap search and evaluation algorithm. In this case, if a plurality of gaps is searched for, one target gap into which a lane is to be changed may be set. If one gap is searched for, the retrieved gap may become a target gap.

In the approaching stage, while approaching the target gap, the vehicle may perform an algorithm for simultaneously evaluating the easiness of a lane change into the target gap and the level of safety for the lane change. If the target gap is determined as a gap unreachable by the vehicle for the minimum time or more that is taken to perform the lane change while the vehicle approaches the target gap, the vehicle may transition from the approaching stage to the ready stage again. Alternatively, if the target gap is determined as a gap reachable by the vehicle for the minimum time or more that is taken to perform the lane change, as the approach to the lagging vehicle placed in the target gap is completed, the vehicle may transition from the approaching stage to the negotiation stage or the lane change stage. If it is determined that a minimum safety distance has been secured in the target gap through the gap search and evaluation algorithm for the lane change, the vehicle may transition from the approaching stage to the lane change stage. If it is determined that the minimum safety distance has not been secured in the target gap, the vehicle may transition from the approaching stage to the negotiation stage.

In the negotiation stage, the vehicle may deliver a lane change intention of the vehicle to the lagging vehicle in the target gap while driving closely to the target gap as much as possible to the extent that the vehicle does not pass the lane of the target gap. In the negotiation process, if the minimum safety distance is secured in the target gap, the vehicle may transition from the negotiation stage to the lane change stage. If the minimum safety distance is not secured in the target gap, the vehicle may transition from the negotiation stage to the ready stage.

In the lane change stage, the vehicle may perform the lane change and simultaneously calculate a degree of risk for surrounding vehicles in real time. When a risk degree result calculated from the degree of risk is a specific degree of risk or more, the vehicle may transition from the lane change stage to the ready stage. When the risk degree result is the specific degree of risk or less and the vehicle enters the lane of the target gap, the vehicle may transition from the lane change stage to the completion stage.

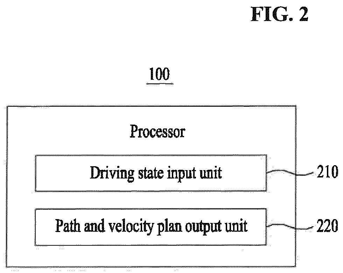

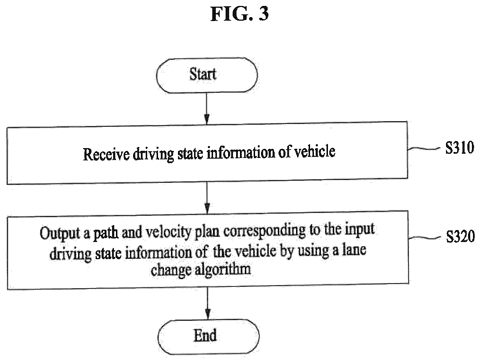

FIG. 2 is a block diagram for describing a construction of a lane change system. FIG. 3 is a flowchart for describing a lane change method of the lane change system.

The processor of the lane change system 100 may include a driving state input unit 210 and a path and velocity plan output unit 220. The components of the processor may be expressions of different functions that are performed by the processor based on a control command that is provided by a program code stored in the lane change system 100. The processor and the components of the processor may control the lane change system 100 to perform steps 310 to 320 that are included in the lane change method of FIG. 3. In this case, the processor and the components of the processor may be implemented to execute an instruction according to a code of an operating system and a code of at least one program that are stored in a memory.

The processor may load, onto the memory, a program code stored in a file of a program for the lane change method. For example, when the program is executed by the lane change system 100, the processor may control the lane change system 100 to load the program code from the file of the program to the memory under the control of the operating system. In this case, the driving state input unit 210 and the path and velocity plan output unit 220 may be different functional expressions of the processor for subsequently executing steps 310 to 320 by executing an instruction of a corresponding part, which is included in the program code loaded onto the memory.

In step 310, the driving state input unit 210 may receive driving state information of a vehicle. In this case, the driving state information of the vehicle may include situation information of a surrounding vehicle for recognizing a situation of the surrounding vehicle that is present on the basis of the vehicle, in addition to driving information indicating whether the driving of the vehicle has been stopped or whether the vehicle is driving and state information (e.g., information on the position of the vehicle and information on the speed of the vehicle) related to the driving of the vehicle. For example, the situation information of the surrounding vehicle may include driving information of the surrounding vehicle and state information of the surrounding vehicle (e.g., driving information of the surrounding vehicle, information on the position of the surrounding vehicle, and information on the speed of the surrounding vehicle).

In step 320, the path and velocity plan output unit 220 may output a path and velocity plan corresponding to the input driving state information of the vehicle by using the lane change algorithm. The path and velocity plan output unit 220 may search for a gap into which the vehicle can change its lane, and may control the vehicle to change its lane based on a plurality of lane change transition conditions set to change the lane into the retrieved gap. The path and velocity plan output unit 220 may search for the gap into which the vehicle can change its lane by predicting a future movement of a surrounding vehicle based on the gap search and evaluation algorithm. The path and velocity plan output unit 220 may analyze the easiness of a lane change between the vehicle and the surrounding vehicle and evaluate a level of safety the vehicle and the surrounding vehicle. The path and velocity plan output unit 220 may search for a gap between the vehicle and the surrounding vehicle for the lane change, while simultaneously maintaining a safety distance from a leading vehicle on the basis of the vehicle when the vehicle is driving or the driving of the vehicle is stopped in the ready stage of the vehicle.

The path and velocity plan output unit 220 may transition from the ready stage to the approaching stage in order to adjust the longitudinal position of the vehicle, and may bring the vehicle to approach the retrieved gap in the transitioned approaching stage. The path and velocity plan output unit 220 may determine whether the retrieved gap is a gap reachable by the vehicle for a minimum time or more that is taken to perform the lane change while the vehicle approaches the retrieved gap. If it is determined that the retrieved gap is a gap unreachable by the vehicle for the minimum time or more that is taken to perform the lane change, the path and velocity plan output unit 220 may transition from the approaching stage to the ready stage. In other words, the path and velocity plan output unit 220 may search for a gap again while the vehicle approaches the retrieved gap. When the retrieved gap is determined as a gap reachable by the vehicle while the vehicle approaches the retrieved gap through the re-search, the path and velocity plan outputunit 220 may maintain the approach of the vehicle to the retrieved gap for the lane change. When the retrieved gap is determined as a gap unreachable by the vehicle, the path and velocity plan output unit 220 may transition from the approaching stage to the ready stage in order to search for a new gap.

Furthermore, as the vehicle is brought to approach the retrieved gap in the approaching stage, the path and velocity plan output unit 220 may transition from the approaching stage to the negotiation stage so that the vehicle cuts in the retrieved gap. In the transitioned negotiation stage, the vehicle may secure the area of the retrieved gap by delivering a lane change intention of the vehicle to the lagging vehicle in the retrieved gap, and may identify the yield intention of the lagging vehicle. When a minimum safety distance is secured in the retrieved gap, the path and velocity plan output unit 220 may transition from the negotiation stage to the lane change stage. When the minimum safety distance is not secured in the retrieved gap, the path and velocity plan output unit 220 may transition from the negotiation stage to the ready stage.

Furthermore, when identifying the yield intention of the lagging vehicle in the negotiation stage, the path and velocity plan output unit 220 may transition from the negotiation stage to the lane change stage. In the transitioned lane change stage, the vehicle may perform the lane change by using the deep reinforcement learning algorithm. In the lane change stage, the path and velocity plan output unit 220 may calculate a degree of risk for a surrounding vehicle in real time while the vehicle performs the lane change, and may transition from the lane change stage to the ready stage when the calculated degree of risk is a specific degree of risk or more.

Furthermore, when the vehicle performs the lane change in the lane change stage, the path and velocity plan output unit 220 may transition from the lane change stage to the completion stage. When the vehicle succeeds in a target lane for the retrieved gap in the transitioned completion stage, the path and velocity plan output unit 220 may maintain the lane of the vehicle by considering an inter-vehicle distance from the leading vehicle of the target lane.

The lane change technology proposed may be applied to an autonomous driving technology and a driver support system for a vehicle. The autonomous lane change algorithm is a technology that needs to be essentially applied from semi-autonomous driving (level2) to full autonomous driving (level5). The autonomous lane change algorithm may also be applied to a non-essential lane change situation in which a lane change is performed in order to rapidly reach a destination in addition to a situation in which a lane change needs to be essentially performed as in a lane merge section. That is, the autonomous lane change algorithm may be applied to all algorithms for changing a lane through an interaction with a surrounding vehicle, such as a modern roundabout and passing, in addition to a simple lane change.

The aforementioned apparatus may be implemented as a hardware element, a software element and/or a combination of a hardware element and a software element. For example, the apparatus and components described in the examples may be implemented using one or more general-purpose computers or special-purpose computers, for example, a processor, a controller, an arithmetic logic unit (ALU), a digital signal processor, a microcomputer, a field programmable gate array (FPGA), a programmable logic unit (PLU), a microprocessor or any other device capable of executing or responding to an instruction. A processing device may perform an operating system (OS) and one or more software applications executed on the OS. Furthermore, the processing device may access, store, manipulate, process and generate data in response to the execution of software. For convenience of understanding, one processing device has been illustrated as being used, but a person having ordinary knowledge in the art may understand that the processing device may include a plurality of processing elements and/or a plurality of types of processing elements. For example, the processing device may include a plurality of processors or one processor and one controller. Furthermore, other processing configurations, such as a parallel processor, are also possible.

Software may include a computer program, a code, an instruction or a combination of one or more of them, and may configure a processor so that it operates as desired or may instruct processors independently or collectively. Software and/or data may be embodied in any type of a machine, component, physical device, virtual equipment, or computer storage medium or device so as to be interpreted by the processor or to provide an instruction or data to the processor. The software may be distributed to computer systems connected over a network and may be stored or executed in a distributed manner. The software and data may be stored in one or more computer-readable recording media.

The method may be implemented in the form of a program instruction executable by various computer means and recorded on a computer-readable recording medium. The computer-readable recording medium may include a program instruction, a data file, and a data structure alone or in combination. The program instructions stored in the medium may be specially designed and constructed for the present disclosure, or may be known and available to those skilled in the field of computer software. Examples of the computer-readable storage medium include magnetic media such as a hard disk, a floppy disk and a magnetic tape, optical media such as a CD-ROM and a DVD, magneto-optical media such as a floptical disk, and hardware devices specially configured to store and execute program instructions such as a ROM, a RAM, and a flash memory. Examples of the program instructions include not only machine language code that is constructed by a compiler but also high-level language code that can be executed by a computer using an interpreter or the like.

As described above, although the examples have been described in connection with the limited examples and the drawings, those skilled in the art may modify and change the examples in various ways from the description within the scope of the appended claims.

## Claims

1. A lane change method performed by a lane change system, comprising:
receiving (S310) driving state information of a vehicle; and
outputting (S320) a path and velocity plan corresponding to the input driving state information of the vehicle by using a lane change algorithm,
wherein the driving state information of the vehicle comprises state information of the vehicle comprising driving information of the vehicle and situation information for recognizing a situation of at least one surrounding vehicle,
wherein outputting (S320) the path and velocity plan comprises:
searching for and retrieving a gap into which the vehicle changes its lane, wherein searching for the gap comprises:
searching for the gap into which the vehicle changes the lane by predicting a future movement of the at least one surrounding vehicle based on a gap search and evaluation algorithm, and
analyzing easiness of the lane change between the vehicle and the at least one surrounding vehicle and evaluating a level of safety between the vehicle and the at least one surrounding vehicle,
wherein the analysis of the easiness of the lane change determines whether a gap for a lane change is a gap between surrounding vehicles, which is reachable by the vehicle for a minimum time or more that is taken to perform the lane change on the basis of a longitudinal position of the vehicle,
wherein evaluating the level of safety determines whether a gap between the vehicle and the at least one surrounding vehicle has a minimum safety distance; and
setting a gap that satisfies both the easiness of a lane change and the level of safety as a target retrieved gap; and
controlling the vehicle to change the lane based on a plurality of lane change transition condition to change a lane in the retrieved gap, wherein the plurality of lane change transition conditions comprises a ready stage, an approaching stage, a negotiation stage, a lane change stage, and a completion stage for the lane change by the vehicle,
wherein controlling the vehicle comprises
transitioning from the approaching stage to the negotiation stage in which the vehicle widens a gap area to be cut in so that the vehicle cuts in the retrieved gap as the vehicle approaches the retrieved gap;
securing an area of the retrieved gap by delivering a lane change intention of the vehicle to a lagging vehicle in the retrieved gap in the transitioned negotiation stage; and
identifying a yield intention of the lagging vehicle by driving very close to a next lane;
transitioning from the negotiation stage to the lane change stage when the yield intention of the lagging vehicle is identified; and
performing, by the vehicle, the lane change in the transitioned lane change stage.

2. The lane change method of claim 1, wherein searching for the gap comprises searching for the gap for the lane change between the vehicle and the at least one surrounding vehicle while maintaining a safety distance from a leading vehicle while the vehicle is driving or the driving of the vehicle is stopped in the ready stage.

3. The lane change method of any of claims 1-2, wherein controlling the vehicle comprises:
transitioning from the ready stage to the approaching stage in order to adjust the longitudinal position for the retrieved gap, and
bringing the vehicle to approach the retrieved gap in the transitioned approaching stage.

4. The lane change method of any of claims 1-3, wherein controlling the vehicle comprises transitioning from the approaching stage to the ready stage when the retrieved gap is determined as a gap unreachable by the vehicle for the minimum time or more that is taken to perform the lane change.

5. The lane change method of any of claims 1 to 4, wherein controlling the vehicle comprises:
transitioning from the negotiation stage to the lane change stage when the minimum safety distance is secured in the retrieved gap, and
transitioning from the negotiation stage to the ready stage when the minimum safety distance is not secured in the retrieved gap.

6. The lane change method of any of claims 1 to 5, wherein:
controlling the vehicle comprises performing, by the vehicle, the lane change by using a deep reinforcement learning algorithm in the transitioned lane change stage,
the deep reinforcement learning algorithm generates a lane change path for the vehicle by determining an interaction between the vehicle and the at least one surrounding vehicle, a form of a road, and a limitation condition in which a lane needs to be changed, and
wherein controlling the vehicle comprises:
calculating a degree of risk for the at least one surrounding vehicle in real time while the vehicle performs the lane change in the lane change stage; and
transitioning from the lane change stage to the ready stage when the calculated degree of risk is a specific degree of risk or more.

7. The lane change method of any of claims 1 to 6, wherein controlling the vehicle comprises:
transitioning from the lane change stage to the completion stage as the vehicle performs the lane change, and
maintain a lane of the vehicle by considering an inter-vehicle distance from a leading vehicle in a target lane when the vehicle succeeds in the target lane in the retrieved gap in the transitioned completion stage.

8. A lane change system (100) comprising:
a driving state input unit (210) configured to receive driving state information of a vehicle; and
a path and velocity plan output unit (220) configured to output a path and velocity plan corresponding to the input driving state information of the vehicle, adapted to execute the lane change method according to any of claims 1-7,
wherein the driving state information of the vehicle comprises state information of the vehicle comprising driving information of the vehicle and situation information for recognizing a situation of at least one surrounding vehicle.

## Patentansprüche

1. Spurwechselverfahren, das von einem Spurwechselsystem durchgeführt wird und Folgendes umfasst:
Empfang (S310) von Fahrzustandsinformationen eines Fahrzeugs; und
Ausgabe (S320) eines Pfad- und Geschwindigkeitsplans, der den eingegebenen Fahrzustandsinformationen des Fahrzeugs entspricht, unter Verwendung eines Spurwechselalgorithmus,
wobei die Fahrzustandsinformationen des Fahrzeugs Zustandsinformationen des Fahrzeugs umfassen, die Fahrinformationen des Fahrzeugs sowie Situationsinformationen zur Erkennung einer Situation mindestens eines umgebenden Fahrzeugs umfassen,
wobei die Ausgabe (S320) des Pfad- und Geschwindigkeitsplans Folgendes umfasst:
Suchen und Erkennen einer Lücke, in die das Fahrzeug die Spur wechselt, wobei das Suchen der Lücke Folgendes umfasst:
Suchen nach der Lücke, in die das Fahrzeug die Spur wechselt, durch Vorhersage einer zukünftigen Bewegung des mindestens einen umgebenden Fahrzeugs auf der Grundlage eines Algorithmus zur Lückensuche und -bewertung, und
Analyse der Spurwechsel-Durchführbarkeit zwischen dem Fahrzeug und dem mindestens einen umgebenden Fahrzeug sowie Bewertung des Sicherheitsniveaus zwischen dem Fahrzeug und dem mindestens einen umgebenden Fahrzeug,
wobei durch die Analyse der Spurwechsel-Durchführbarkeit bestimmt wird, ob es sich bei einer Lücke für einen Spurwechsel um eine Lücke zwischen umgebenden Fahrzeugen handelt, die vom Fahrzeug innerhalb einer Zeit, die mindestens so lang ist wie die Zeit, die für die Durchführung des Spurwechsels benötigt wird, erreicht werden kann und zwar auf der Grundlage der Längsposition des Fahrzeugs,
wobei durch die Bewertung des Sicherheitsniveaus bestimmt wird, ob der Abstand zwischen dem Fahrzeug und dem mindestens einen umgebenden Fahrzeug einen Mindestsicherheitsabstand aufweist; und
Festlegung einer Lücke, die sowohl die Spurwechsel-Durchführbarkeit als auch das Sicherheitsniveau als eine Ziel-Lücke erfüllt; und
Steuerung des Fahrzeugs zum Spurwechsel auf Grundlage einer Vielzahl von Spurwechsel-Übergangsbedingungen, um in die Ziel-Lücke zu wechseln, wobei die Vielzahl von Spurwechsel-Übergangsbedingungen eine Bereitschaftsphase, eine Annäherungsphase, eine Abstimmungsphase, eine Spurwechselphase und eine Abschlussphase für den Spurwechsel durch das Fahrzeug umfasst,
wobei die Steuerung des Fahrzeugs Folgendes umfasst
Überleitung von der Annäherungsphase zur Abstimmungsphase, in der das Fahrzeug den Bereich der Lücke, in die es einfahren soll, vergrößert, sodass das Fahrzeug in die Ziel-Lücke einfährt, sobald es sich dieser nähert;
Sicherung eines Bereichs der Ziel-Lücke durch Übermittlung der Spurwechselabsicht des Fahrzeugs an ein hinterherfahrendes Fahrzeug in der Ziel-Lücke in der übergeleiteten Abstimmungsphase; und
Erkennen einer Vorlassabsicht des hinterfahrenden Fahrzeugs durch sehr nahes Fahren an einer benachbarten Spur;
Überleitung von der Abstimmungsphase zur Spurwechselphase, wenn die Vorlassabsicht des hinterfahrenden Fahrzeugs erkannt wird; und
Durchführen des Spurwechsels durch das Fahrzeug in der übergeleiteten Spurwechselphase.

2. Spurwechselverfahren nach Anspruch 1, wobei das Suchen nach einer Lücke das Suchen nach einer Lücke für den Spurwechsel zwischen dem Fahrzeug und dem mindestens einen umgebenden Fahrzeug umfasst, während ein Sicherheitsabstand zu einem vorausfahrenden Fahrzeug eingehalten wird, während das Fahrzeug fährt oder das Fahren des Fahrzeugs in der Bereitschaftsphase gestoppt wird.

3. Spurwechselverfahren nach einem der Ansprüche 1 bis 2, wobei die Steuerung des Fahrzeuges Folgendes umfasst:
Überleitung von der Bereitschaftsphase zur Annäherungsphase, um die Längsposition an die Ziel-Lücke anzupassen, und
Veranlassung des Fahrzeuges dazu, dass es sich der Ziel-Lücke in der übergeleiteten Annäherungsphase nähert.

4. Spurwechselverfahren gemäß einem der Ansprüche 1 bis 3, wobei die Steuerung des Fahrzeugs die Überleitung von der Annäherungsphase zur Bereitschaftsphase umfasst, wenn die Ziel-Lücke als eine Lücke bestimmt wird, die vom Fahrzeug innerhalb einer Zeit, die mindestens so lang ist wie die Zeit, die für die Durchführung des Spurwechsels benötigt wird, nicht erreicht werden kann.

5. Spurwechselverfahren gemäß einem der Ansprüche 1 bis 4, wobei die Steuerung des Fahrzeugs Folgendes umfasst:
Überleitung von der Abstimmungsphase zur Spurwechselphase, sobald der Mindestsicherheitsabstand in der Ziel-Lücke gewährleistet ist, und
Überleitung von der Abstimmungsphase zur Bereitschaftsphase, wenn der Mindestsicherheitsabstand in der Ziel-Lücke nicht gewährleistet ist.

6. Spurwechselverfahren nach einem der Ansprüche 1 bis 5, wobei:
die Steuerung des Fahrzeugs die Durchführung des Spurwechsels durch das Fahrzeug unter Verwendung eines Deep-Reinforcement-Learning-Algorithmus in der übergeleiteten Spurwechselphase umfasst,
der Deep-Reinforcement-Learning-Algorithmus einen Spurwechselpfad für das Fahrzeug generiert, indem er eine Interaktion zwischen dem Fahrzeug und dem mindestens einen umgebenden Fahrzeug, einer Straßenform sowie einer Einschränkungsbedingung, unter der ein Spurwechsel erforderlich ist, bestimmt, und
wobei die Steuerung des Fahrzeugs Folgendes umfasst:
Berechnung eines Risikograds für das mindestens eine umgebende Fahrzeug in Echtzeit, während das Fahrzeug in der Spurwechselphase den Spurwechsel durchführt; und
Überleitung von der Spurwechselphase zur Bereitschaftsphase, wenn der berechnete Risikograd einen bestimmten Risikograd erreicht oder überschreitet.

7. Spurwechselverfahren gemäß einem der Ansprüche 1 bis 6, wobei die Steuerung des Fahrzeugs Folgendes umfasst:
Überleitung von der Spurwechselphase zur Abschlussphase, während das Fahrzeug den Spurwechsel durchführt, und
Halten des Fahrzeugs in einer Spur, indem der Abstand zu einem vorausfahrenden Fahrzeug in einer Zielspur berücksichtigt wird, sobald das Fahrzeug in der Zielspur die Ziel-Lücke in der übergeleiteten Abschlussphase erreicht hat.

8. Spurwechselsystem (100), das Folgendes umfasst:
eine Fahrzustands-Eingabeeinheit (210), die so ausgelegt ist, dass sie Fahrzustandsinformationen eines Fahrzeugs empfängt; und
eine Ausgabeeinheit (220) für einen Pfad- und Geschwindigkeitsplan, die so konfiguriert ist, dass sie einen Pfad- und Geschwindigkeitsplan ausgibt, der den eingegebenen Fahrzustandsinformationen des Fahrzeugs entspricht, und die dazu ausgelegt ist, das Spurwechselverfahren gemäß einem der Ansprüche 1 bis 7 auszuführen,
wobei die Fahrzustandsinformationen des Fahrzeugs Zustandsinformationen des Fahrzeugs umfassen, die Fahrinformationen des Fahrzeugs sowie Situationsinformationen zur Erkennung einer Situation mindestens eines umgebenden Fahrzeugs umfassen.

## Revendications

1. Procédé de changement de voie exécuté par un système de changement de voie, comprenant :
la réception (S310) d'informations d'état de conduite d'un véhicule ; et
la délivrance (S320) d'un plan de trajectoire et de vitesse correspondant aux informations d'état de conduite du véhicule reçues, à l'aide d'un algorithme de changement de voie,
dans lequel les informations d'état de conduite du véhicule comprennent des informations d'état du véhicule comprenant des informations de conduite du véhicule et des informations de situation pour reconnaître une situation d'au moins un véhicule environnant,
dans lequel la délivrance (S320) du plan de trajectoire et de vitesse comprend :
la recherche et la récupération d'un intervalle dans lequel le véhicule change de voie, dans lequel la recherche de l'intervalle comprend :
la recherche de l'intervalle dans lequel le véhicule change de voie en prédisant un mouvement futur de l'au moins un véhicule environnant sur la base d'un algorithme de recherche et d'évaluation d'intervalle, et
l'analyse de la facilité du changement de voie entre le véhicule et l'au moins un véhicule environnant et l'évaluation d'un niveau de sécurité entre le véhicule et l'au moins un véhicule environnant,
dans lequel l'analyse de la facilité du changement de voie détermine si un intervalle pour un changement de voie est un intervalle situé entre des véhicules environnants, qui est peut être atteint par le véhicule pendant une durée minimale ou plus nécessaire pour réaliser le changement de voie sur la base d'une position longitudinale du véhicule,
dans lequel l'évaluation du niveau de sécurité détermine si un intervalle entre le véhicule et l'au moins un véhicule environnant présente une distance de sécurité minimale ; et
la définition d'un intervalle qui satisfait à la fois la facilité d'un changement de voie et le niveau de sécurité en tant qu'intervalle récupéré cible ; et
le contrôle du véhicule afin de changer de voie sur la base d'une pluralité de conditions de transition de changement de voie afin de changer de voie dans l'intervalle récupéré, dans lequel la pluralité de conditions de transition de changement de voie comprend une étape de préparation, une étape d'approche, une étape de négociation, une étape de changement de voie et une étape d'achèvement pour le changement de voie par le véhicule,
dans lequel le contrôle du véhicule comprend
le passage de l'étape d'approche à l'étape de négociation à laquelle le véhicule élargit une zone d'intervalle à traverser afin que le véhicule s'insère dans l'intervalle récupéré à mesure que le véhicule s'approche de l'intervalle récupéré ;
le fait de s'assurer une zone de l'intervalle récupéré en signalant l'intention de changement de voie du véhicule à un véhicule qui le suit dans l'intervalle récupéré à l'étape de négociation qui fait suite à l'étape d'approche ; et
l'identification de l'intention du véhicule qui suit de céder le passage, en roulant très près d'une voie suivante ;
le passage de l'étape de négociation à l'étape de changement de voie lorsque l'intention du véhicule qui suit de céder le passage est identifiée ; et
la réalisation, par le véhicule, du changement de voie à l'étape de changement de voie qui fait suite à l'étape de négociation.

2. Procédé de changement de voie selon la revendication 1, dans lequel la recherche de l'intervalle comprend la recherche de l'intervalle pour le changement de voie entre le véhicule et l'au moins un véhicule environnant tout en maintenant une distance de sécurité par rapport à un véhicule qui précède pendant que le véhicule roule ou est à l'arrêt à l'étape de préparation.

3. Procédé de changement de voie selon l'une quelconque des revendications 1 ou 2, dans lequel le contrôle du véhicule comprend :
le passage de l'étape de préparation à l'étape d'approche afin d'ajuster la position longitudinale pour l'intervalle récupéré, et
le fait d'amener le véhicule à s'approcher de l'intervalle récupéré à l'étape d'approche qui fait suite à l'étape de préparation.

4. Procédé de changement de voie selon l'une quelconque des revendications 1 à 3, dans lequel le contrôle du véhicule comprend le passage de l'étape d'approche à l'étape de préparation lorsque l'intervalle récupéré est déterminé comme un intervalle qui ne peut pas être atteint par le véhicule pendant la durée minimale ou plus nécessaire pour réaliser le changement de voie.

5. Procédé de changement de voie selon l'une quelconque des revendications 1 à 4, dans lequel le contrôle du véhicule comprend :
le passage de l'étape de négociation à l'étape de changement de voie lorsque la distance de sécurité minimale est assurée dans l'intervalle récupéré, et
le passage de l'étape de négociation à l'étape de préparation lorsque la distance de sécurité minimale n'est pas assurée dans l'intervalle récupéré.

6. Procédé de changement de voie selon l'une quelconque des revendications 1 à 5, dans lequel :
le contrôle du véhicule comprend la réalisation, par le véhicule, du changement de voie à l'aide d'un algorithme d'apprentissage par renforcement profond à l'étape de changement de voie qui fait suite à l'étape de négociation,
l'algorithme d'apprentissage par renforcement profond génère une trajectoire de changement de voie pour le véhicule en déterminant une interaction entre le véhicule et l'au moins un véhicule environnant, une forme d'une route et une condition de limitation dans laquelle un changement de voie doit être réalisé, et
dans lequel le contrôle du véhicule comprend :
le calcul d'un degré de risque pour l'au moins un véhicule environnant en temps réel pendant que le véhicule réalise le changement de voie à l'étape de changement de voie ; et
le passage de l'étape de changement de voie à l'étape de préparation lorsque le degré de risque calculé est un degré de risque spécifique ou plus.

7. Procédé de changement de voie selon l'une quelconque des revendications 1 à 6, dans lequel le contrôle du véhicule comprend :
le passage de l'étape de changement de voie à l'étape d'achèvement à mesure que le véhicule réalise le changement de voie, et
le maintien du véhicule dans une voie en tenant compte de la distance inter-véhicules par rapport à un véhicule qui précède dans une voie cible lorsque le véhicule s'insère dans ladite voie cible dans l'intervalle récupéré à l'étape d'achèvement qui fait suite à l'étape de changement de voie.

8. Système de changement de voie (100) comprenant :
une unité d'entrée d'état de conduite (210) configurée pour recevoir des informations d'état de conduite d'un véhicule ; et
une unité de délivrance de plan de trajectoire et de vitesse (220) configurée pour délivrer un plan de trajectoire et de vitesse correspondant aux informations d'état de conduite du véhicule reçues, adaptée pour exécuter le procédé de changement de voie selon l'une quelconque des revendications 1 à 7,
dans lequel les informations d'état de conduite du véhicule comprennent des informations d'état du véhicule comprenant des informations de conduite du véhicule et des informations de situation pour reconnaître une situation d'au moins un véhicule environnant.
